# EUROPEAN PATENT APPLICATION

(11) **EP 2 187 108 A2**
(43) Date of publication of application: **19.05.2010**
(21) Application number: 09252602.9
(22) Date of filing: 12.11.2009
(51) Int. Cl.: F17C 11/00

(54) **Thermal management apparatus for gas storage**

(30) Priority: 13.11.2008 US 269913
(71) Applicant: Linde North America, INC., 575 Mountain Avenue Murray Hill, NJ 07974 (US)
(72) Inventor: Lee, Ron Clark, NJ 08804 (US); Fitch, Frank Roger, NJ 07921 (US); Tamhankar, Satish Shankar, NJ 07076 (US)
(74) Representative: Wickham, Michael

(57) **Abstract**

An apparatus for storing gases such as hydrogen gas at cryogenic temperatures. The hydrogen gas is stored in a storage vessel 1 at cryogenic temperatures and those cryogenic temperatures are sustained by a heat exchanger (comprising a reservoir 10, a fluid connection means 12, a coil supply tube 14 and coils 16) which provides nearly uniform distribution of a volatile liquid throughout the hydrogen gas being stored. The storage vessel contains an adsorbent of the physiosorption kind. The self regulating flow of oxygen through the heat exchanger maintains the adsorbent at a suitable cryogenic storage temperature even when the apparatus is not being used to supply hydrogen.

## Description

The present invention relates to an apparatus for storing gas, particularly hydrogen gas at cryogenic temperatures where the gas is periodically removed from storage. More particularly, the present invention relates to providing thermal management of the gas being stored by heat exchanger means that provide an efficient and self-circulating cryogenic refrigeration mechanism during the filling of the gas storage vessel.

The expansion of the use of hydrogen in industrial and commercial areas has caused a greater need to store hydrogen effectively. This is particularly true as hydrogen becomes a fuel of choice for fleet and automotive applications where hydrogen must be stored on-board the vehicle itself and be readily available from a fuelling station.

Currently the most prevalent methods of storage and transportation consist of liquid hydrogen or compressed hydrogen gas at 200 to 800 bar pressure. While liquid hydrogen provides the highest possible density, it is expensive to produce as this requires temperatures as low as 20 K, which uses about 47 MJ/kg H₂. Conventional 200 bar pressure compressed hydrogen gas has a relatively low density. A pressure of about 800 bar at 300 K is required to obtain a storage capacity 70% of that of liquid H₂. As a compromise, hydrogen can be stored at a moderate pressure of 80 to 100 bar at a cryogenic temperature, such as at 77 K, using liquid nitrogen as the coolant. However, this generally would require continuous refrigeration, and would likely consume significant quantities of liquid nitrogen.

It is also known to use a physisorption type adsorbent at a cryogenic temperature, such as 77 K, to provide higher storage capacity at moderate pressures.

The apparatus according to the invention further uses the refrigeration provided by hydrogen desorption due to its withdrawal and usage to maintain the cryogenic temperature. As a result only a relatively small amount of liquid nitrogen, contained within a vessel in intimate thermal contact with the hydrogen storage media, is necessary in order to maintain the required low temperature during periods of non-use. The overall energy of refrigeration and compression required to produce the storage conditions according to the invention is about 17 MJ/kg of hydrogen at 80 to 100 bar. This is significantly lower than the energy required to produce liquid hydrogen which is about 47 MJ/kg and is somewhat less than the energy required to store hydrogen at comparable densities without adsorbent material at 200 bar and 77 K.

The present inventors have discovered that the use of a novel heat exchanger arrangement will provide significant improvements in the thermal efficiency of the system during not only hydrogen filling, but also during storage and subsequent usage of the gas.

According to the present invention, there is provided an apparatus for the storage of a gas comprising a storage vessel, a physisorption type adsorbent contained within said storage vessel and heat exchanger means comprising a reservoir containing volatile liquid having fluid input means and vapor output means, a fluid connection means, and at least one heat exchange element situated below said reservoir, wherein said reservoir is in fluid communication with said fluid connection means and said at least heat exchange element element is in fluid communication with said fluid connection means and said reservoir, at least one means for inputting said gas and at least one means for withdrawing said gas

The present invention provides means to store a gas, particularly hydrogen gas, at cryogenic temperatures both during the filling of the storage vessel but also during the storage of the gas where a portion of the gas will periodically be removed from the storage vessel. The heat exchanger arrangement will provide continuous cooling of the stored gas by ensuring a nearly uniform distribution of the volatile liquid, such as a liquid cryogen through the at least one heat exchange element of a heat exchanger apparatus. The storage means and cryogenic cooling are described in United States patent application serial number 601798,804 and PCT application PCT/US2007/010542 filed May 2, 2007 (WO2007/130405 A2) of common assignment herewith, the contents of which are incorporated by reference herein.

Following filling of the cryoadsorptive storage vessel with a gas such as hydrogen gas, the heat exchanger arrangement continues to provide cryogenic temperature control through a self-leveling distributed heat exchange coil arrangement.

When the gas such as hydrogen gas is introduced into the storage vessel during filling, there are two sources of thermal energy that must be removed in order to have a stable, pressurized, storage vessel containing hydrogen at about 77K. The first source is the energy that must be removed from the hydrogen gas, and possibly the internal materials of the storage vessel, due to their being at a temperature greater than 77K. This may also include the energy released by ortho to para hydrogen conversion when hydrogen is cooled from ambient temperature to 77K. This conversion energy may be removed externally before filling the storage vessel with cold hydrogen, or may be removed inside the storage vessel with the aid of appropriate catalyst material.

The second source is the energy released (heat of adsorption) as the hydrogen is adsorbed by the physiosorption material. It is desirable to remove this thermal energy as quickly as possible without unnecessarily introducing added mass to the storage vessel.

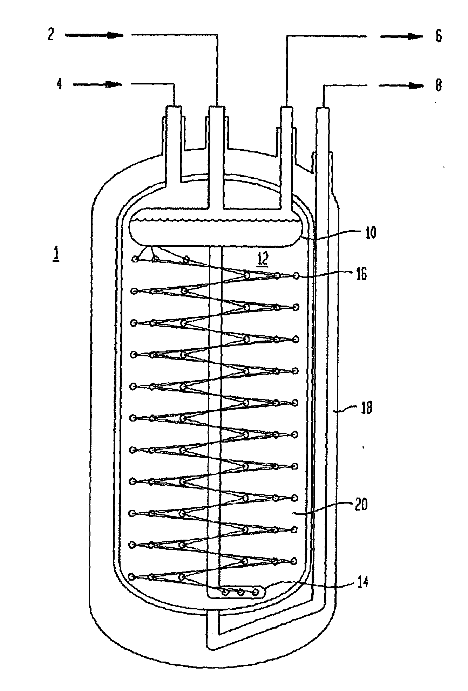

The apparatus according to the invention will now be described by way of example with reference to the accompany drawing. The figure is a schematic representation of a storage vessel arrangement with internal heat exchange and liquid cryogen reservoir.

Referring to the figure, the heat exchanger arrangement shown in the figure consists of a top reservoir of volatile liquid such as liquid nitrogen 10 that, during filling of the system with hydrogen, is kept full (level detector not shown) with a supply of liquid nitrogen through inputting means fill line 2. Connected to the bottom of the volatile liquid reservoir 10 is a central supply tube fluid connection means 12 which feeds liquid nitrogen to a coil supply tube 14 situated at the bottom of the hydrogen storage vessel 1. A heat exchange element comprising three coils 16 of heat exchanger tubing is attached at its bottom to the coil supply tube 14 and at its top. to the bottom of the volatile liquid reservoir 10. This unique arrangement has the advantage of providing a self-regulating continuous flow of liquid nitrogen to the heat exchange element coils 16, while the liquid nitrogen that is heated and boils in the coils is fed back to the volatile liquid reservoir 10 by a self-regulating natural circulation. In general, the boiling in the coils caused by thermal energy removal will cause a two phase (liquid-vapor) mixture to return to the volatile liquid reservoir.

The two-phase mixture will naturally separate in the volatile liquid reservoir 10, and single phase liquid will feed back into coil supply tube 14, while single phase gas will vent through the vapor removal means for removing nitrogen gas vent 6. This self-regulating circulation, which promotes efficient and uniform heat transfer throughout the coils 16, will continue as long as there is boiling and thermal energy removal. Note that there will likely be a small amount of boiling also inside the coil supply tube 14, but the amount will be much less because of the reduced surface area compared to the three coils 16. This reduced amount of boiling may be further reduced by introducing a small amount of thermal insulation around the coil supply tube 14. The small amount of boiling in the coil supply tube 14 will not affect the overall circulation pattern described above.

The volatile liquid is preferably a cryogenic liquid. For purposes of the present invention, the volatile liquid can be in the liquid state or a mixture of both the gaseous and liquid states. Cryogenic liquids other than liquid nitrogen may be used for the cryogenic cooling fluid, including mixtures of oxygen/nitrogen or argon. Optionally other volatile liquids (e.g., hydrocarbons, LNG, liquid air, etc.) can be used instead of liquid nitrogen and the volatile liquid container may be operated at different pressures. For the purpose of this disclosure, liquid air is defined as an arbitrary mixture of oxygen and nitrogen. Furthermore, other refrigerants can be used, such as materials that undergo phase change from liquid to vapor. In general, with alternative refrigerants, the operating temperature range can be from about 30 to 250 K, but more usefully from about 50 to 150 K. The optimum operating temperature will generally depend on the specific adsorbent material and optimization and development of those materials.

Following the fill of the hydrogen storage vessel 1 through fill line 4, there remains a need to maintain the temperature of the storage vessel during periods of storage and periodic hydrogen removal. Although patent application PCT/US2007/010542 (WO 2007/130405 A2) describes a heat exchange and reservoir arrangement, the apparatus according to the present invention includes additional features enabling the liquid reservoir to be depleted during usage, but nevertheless to maintain essentially uniform and distributed cooling throughout the storage vessel. The volatile liquid reservoir is, as shown in the figure, located in a compact vessel in an upper region of the storage vessel. The majority of the storage vessel is cooled by the heat exchange coils which are designed to have much smaller volume compared to the volatile liquid reservoir (at least about two times as much volume in the volatile liquid reservoir relative to the heat exchange coils). During periods of storage when the liquid nitrogen is being partly vaporized to maintain the storage vessel's cryogenic conditions, the arrangement of the volatile liquid reservoir, coil supply tube, and heat exchanger coils ensures a uniform distribution of liquid nitrogen throughout the coils.

The heat exchange element is any device capable of at least partial vaporization of a volatile liquid through heat transfer with its surroundings. Three coils are shown in the figure, however, the number, configuration and arrangement of the heat exchange coils may be modified, and may in fact not be coiled or even of a circular shape or concentrically arranged, but rather could be individual tubes/pipes/colis spaced at regular intervals in a horizontal or vertical fashion. The coils may be finned, or embedded in any other type of enhanced heat transfer media such as a metal foam.

The overall vessel may be of any shape and orientation. The volatile liquid reservoir may be centralized or placed in any location in the upper regions of the vessel. An important design criterion is that the volatile liquid reservoir is situated above the fluid connection means and coil supply tube. Further, vacuum insulation, 18 in the figure, could also be incorporated into the gas storage vessel.

The vessel shown in the figure contains a physisorption material may be chosen from any one of a number of different physiosorption type materials, or a combination of such materials. Their shape and configuration may be in the form of powders, pellets, or solid structures such as monoliths. These materials may be intimately admixed with high thermal conductivity materials to enhance heat transfer through the sorbent mass.

A broad range of adsorbent materials may be employed, including physisorbent materials that include high surface area carbons, for example KOH or thermally activated carbons, alkali metal intercalated, exfoliated, nanostack or herringbone graphitic carbons, carbon nanoforms such as nano-tubes, nano-homs, nano-onions, Buckminster Fullerenes ("buckyballs") and their metal decorated or heterosubstituted analogues; crystalline microporous materials such as zeolites, clays and ALPO-4s and their heteroatom substituted analogues; mesoporous silicas, such as the MCM families and their heteroatom analogues; high surface area metallo-organic or organic framework materials; and other crystalline, for example, certain hexacyanoferrate materials, and non-crystalline high surface area materials.

Preferred materials include: high surface area carbons such as AX-21^{™} provided by Anderson Development Corporation and MAXSORB provided by Kansai Coke Corporation; and metalorganic frameworks such as MOF-177, IRMOF-1 (MOF-5) and IRMOF-20 developed by Prof. Omar Yaghi of the University of Michigan. In addition, combinations of adsorbent materials may be advantageously employed to optimize the storage capacity and refrigeration effect of desorption. This combination may include both physisorbent materials, as well as other adsorbent materials such at metal hydrides, and even non-adsorbent heat transfer materials such as metals or graphite.

The amount (or volume) of physisorbent material enclosed in the storage vessel is generally the maximum achievable. The amount of space not occupied by the adsorbent material will generally include interstitial space that will exist if the adsorbent material is in a pellet or bead form. For pellets or beads, the interstitial space is about 33% of the available volume. Alternatively, the adsorbent material can be manufactured to fully occupy the space (e.g., a monolith type construction) where the interstitial space will be much less. According to this invention, the relative amounts of hydrogen adsorbed on the said physisorbent material and that present in the interstitial spaces are optimized to maximize the storage capacity of the system while providing adequate refrigeration and minimizing overall system cost.

For purposes of illustration, Metal-Organic Frameworks (MOFs) of the type discussed in A. G. Wong-Foy, A. J. Matzger, and O. M. Yaghi, "Exceptional H2 Saturation Uptake in Microporous Metal-Organic Frameworks," J. Am. Chem. Soc. 128, pp. 3494-3495 (2006) were considered. The adsorption characteristics of physisorption materials appropriate for hydrogen storage are indicated by the performance of MOF-177. At about 80 bar and 77 K, MOF-177 will adsorb about 32 Kg/m³ of hydrogen. When the gas stored in crystalline interstitial space is considered, the storage capacity increases to about 49 Kg/m³ of hydrogen. If there is further storage system voidage due to the packing characteristics of the adsorbent material, the effective storage capacity will drop further to about 43 Kg/m³ for a 33% packing voidage. The adsorption/desorption characteristics of physisorption type materials generally ensure the hydrogen can be desorbed with only a drop in pressure and an associated modest drop in temperature. The drop in temperature is a direct result of the refrigeration produced by the heat of desorption.

The hydrogen may be stored at a range of pressures from subatmospheric to several thousand psi or more.

The gas to be stored may be any gas that may be adsorbed onto physiosorption type materials, such as methane.

The liquid nitrogen may be introduced and stored at a range of pressures from subatmospheric to superatmospheric several hundred psi or more. (Ipsi = 6894Pa). The liquid nitrogen pressure may vary from initial cooling and heat removal, through the period of hydrogen storage and usage. Suitable pressure control valves may be introduced onto the nitrogen piping, including back pressure control valve on the nitrogen gas vent line (to maintain elevated pressures). In addition, check valves may be introduced on the nitrogen gas vent to allow the pressure (and hence temperature) to drop during periods of hydrogen withdrawal and cooling due to desorption.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the scope of the present invention.

## Claims

1. Apparatus for the storage of a gas comprising a storage vessel (1), a physisorption type adsorbent contained within said storage vessel and heat exchanger means comprising a reservoir (10) containing volatile liquid having fluid input means (2) and vapor output means (16), a fluid connection means (14), and at least one heat exchange element (16) situated below said reservoir (10), wherein said reservoir (10) is in fluid communication with said fluid connection means (12) and said at least one heat exchange element (16) is in fluid communication with said fluid connection means (12) and said reservoir (10), at least one means (4) for inputting said gas and at least one means for withdrawing said gas

2. Apparatus as claimed in claim 1, wherein said volatile liquid is a liquid cryogen selected from the group consisting of nitrogen, argon, air and other mixtures of oxygen and nitrogen.

3. Apparatus as claimed in claim 1, wherein said volatile liquid is a refrigerant selected from the group consisting of hydrocarbons and liquefied natural gas.

4. Apparatus according to any one of the preceding claims wherein said fluid connection means (14) is a tube.

5. Apparatus according to any one of the preceding claims, wherein said heat exchange element is a device capable of at least partial vaporization of a volatile liquid.

6. Apparatus as claimed in claim 5, wherein said heat exchange element is selected from the group of elements consisting of tubes, pipes, and coils.

7. Apparatus as claimed in claim 6, wherein said coils are spaced at regular intervals in either a horizontal or vertical fashion.

8. Apparatus as claimed in any one of the preceding claims, wherein said reservoir has at least two times the volume of volatile liquid than said heat exchange element.

9. Apparatus as claimed in any one of the preceding claims, wherein said reservoir is in intimate heat transfer relationship with said gas and said adsorbent material.

10. Apparatus as claimed in any one of the preceding claims wherein said physisorption type material is selected from the group consisting essentially of high surface area carbons, KOH or thermally activated carbons, alkali metal intercalated, exfoliated, nanostack or herringbone graphitic carbons, carbon nanoforms selected from the group consisting of nano-tubes, nano-homs, nano-onions, Buckminster Fullerenes and their metal decorated or heterosubstituted analogues; crystalline microporous materials such as zeolites, clays and ALPO-4's and their heteroatom substituted analogues; mesoporous silicas, selected from the group consisting of MCM families and their heteroatom analogues; high surface area metallo-organic or organic framework materials; and mixtures thereof.

11. Apparatus as claimed in any one of the preceding claims, wherein said gas is stored at a pressure of 10 to 500 bar.

12. Apparatus as claimed in any one of the preceding claims, wherein said volatile liquid container contains a volatile liquid at a temperature in the range of 30 to 250 K.
